# EUROPEAN PATENT APPLICATION

(11) **EP 1 278 380 A1**
(43) Date of publication of application: **22.01.2003**
(21) Application number: 01908326.0
(22) Date of filing: 05.03.2001
(51) Int. Cl.: H04N 7/173, H04N 5/44, H04N 17/00

(54) **PROGRAM RECEIVER AND TRANSMITTER**

(30) Priority: 03.03.2000 JP 2000059418
(71) Applicant: Matsushita Electric Industrial Co., Ltd., Kadoma-shi, Osaka 571-8501 (JP); Dentsu Inc., Chuo-ku, Tokyo 104-8426 (JP)
(72) Inventor: NISHI, Hiroyuki, Suginami-ku, Tokyo 168-0065 (JP); KATO, Fumiyuki, Yokohama-shi, Kanagawa 226-0028 (JP); AKIYAMA, Ryuhei, Nishinomiya-shi, Hyogo 662-0066 (JP); MAEDA, Hiroki, Toyonaka-shi, Osaka 560-0043 (JP)
(74) Representative: Balsters, Robert
(86) International application number: JP0101704
(87) International publication number: WO01065852

(57) **Abstract**

A program receiving apparatus includes: a program receiving section for receiving program information and a program identifier for identifying the program information; a program display section for displaying the program information received by the program receiving section; a display monitoring section for monitoring a program display state history which is a history of the display state of the certain program information displayed in the program display section; and a display state history storage section for storing a program identifier of the program information monitored by the display monitoring section and display state history information which is information for indicating a display state history of the program information, in the form of a pair of the program identifier and the display state history information.

## Description

### TECHNICAL FIELD

The present invention relates to a transmitting apparatus for transmitting program information through a satellite broadcasting system, a digital broadcasting system, etc., and to a receiving apparatus for receiving program information transmitted by the transmitting apparatus.

### BACKGROUND ART

In a program receiving apparatus for use in a digital broadcasting system which uses a communication satellite, received program information is accumulated and can be readily viewed at any time. Further, the display form of program information in a program display section of the program receiving apparatus can be readily changed. For example, a program can be displayed in a region having a certain shape, which is at a certain position, on a display screen.

Thus, in the case where a viewer does not view program information transmitted from a broadcast station at the time of transmission of the program information, it is not easy to accurately investigate which program the viewer viewed and how long the viewer viewed the program. In the case where the program information includes a commercial about a product or the like, the program information about the commercial can be readily separated from program information about a TV drama or the like. In such a case, there is a probability that a viewer views only the program information about a TV drama or the like, but does not view the program information about the commercial.

An objective of the present invention is to provide program receiving and transmitting apparatuses, which can motivate viewers to view desired program information by providing a suitable service according to the display state of the desired program information.

### DISCLOSURE OF THE INVENTION

A program receiving apparatus according to the present invention includes: a program receiving section for receiving program information and a program identifier for identifying the program information; a program display section for displaying the program information received by the program receiving section; a display monitoring section for monitoring a program display state history which is a history of the display state of the certain program information displayed in the program display section; and a display state history storage section for storing a program identifier of the program information monitored by the display monitoring section and display state history information which is information for indicating a display state history of the program information, in the form of a pair of the program identifier and the display state history information. With such a structure, the above objective is achieved.

The program receiving apparatus may further include a program accumulating section for accumulating the program information and the program identifier received by the program receiving section, wherein the program display section may display the program information accumulated in the program accumulating section.

The program receiving apparatus may further include a display state history transmitting section for transmitting the display history information stored in the display state history storage section.

The program receiving apparatus may further include a display form setting section for setting a display form of the program information displayed in the program display section, wherein the program display section may display the program information according to the display form.

The program receiving apparatus may further includes: a permitting condition storage section for storing a service permitting condition which is a condition for provision of a service; a condition match determination section for determining whether or not the display state history information matches the service permitting condition stored in the permitting condition storage section; and a service providing section for producing information about a service provided to a viewer when the condition match determination section determines a match.

The program receiving section may receive a service permitting condition, and the program receiving apparatus may further include a service permitting condition recording section for storing the service permitting condition in the permitting condition storage section.

The display monitoring section may have a timer, and a display information history monitored by the display monitoring section may include a display duration of the program information.

The display monitoring section may have a clock, and a display information history monitored by the display monitoring section may include a display start time of the program information.

The display monitoring section may include screen size detecting means for detecting the screen size of the program information displayed in the program display section, and a display information history monitored by the display monitoring section may include a display screen size of the program information.

The display monitoring section may include display form detection means for detecting a display form of the program information displayed in the program display section, and a display information history monitored by the display monitoring section may include the display form of the program information.

The display monitoring section may include display time detection means for detecting the number of times the program information is displayed in the program display section, and a display information history monitored by the display monitoring section may include the number of display times of the program information.

The service providing section may produce coupon information which is information about a coupon ticket.

The service providing section may produce key information which unscrambles a specific scrambled program.

A transmitting apparatus of the present invention transmits a service permitting condition based on the display history information transmitted from the display state history transmitting section of the present invention.

### BRIEF DESCRIPTION OF THE DRAWINGS

Figure **1** is a block diagram showing an example of a service providing system which is established by using a program receiving apparatus and a program transmitting apparatus according to an embodiment of the present invention.
Figures **2(a)** through **2(d)** are schematic views for illustrating examples of the display form of a program display section of a program receiving apparatus according to an embodiment of the present invention.
Figure **3** is a flowchart for illustrating a control operation of a program receiving apparatus according to an embodiment of the present invention.
Figure **4** is a flowchart for illustrating a control operation of a condition match determination section of a program receiving apparatus according to an embodiment of the present invention.
Figure **5** is a flowchart for illustrating the control operation of the condition match determination section according to an embodiment of the present invention.
Figure **6** is a flowchart for illustrating the control operation of the condition match determination section according to an embodiment of the present invention.
Figure **7** is a schematic view for showing an example of a printed coupon ticket of coupon information produced by a program receiving apparatus according to an embodiment of the present invention.

### BEST MODE FOR CARRYING OUT THE INVENTION

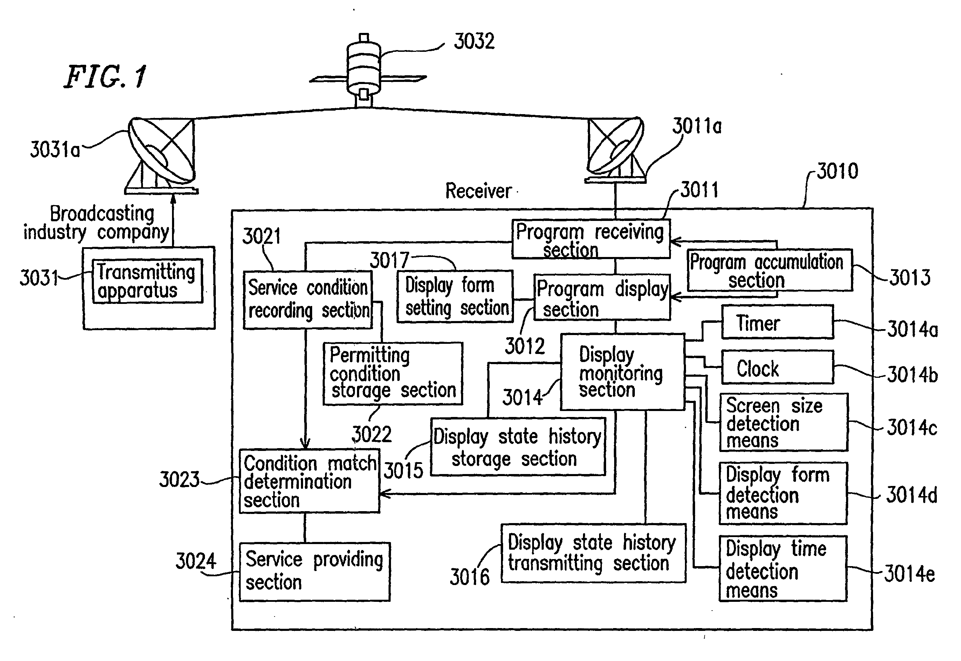

Hereinafter, an embodiment of the present invention will be described with reference to the drawings. Figure 1 is a block diagram showing an example of a service providing system which utilizes a program receiving apparatus and program transmitting apparatus of the present invention. This service providing system is realized by a transmitting apparatus **3031** which is used by a broadcasting industry company for transmitting digital broadcast program information, and a program receiving apparatus **3010** of a viewer which is used for receiving, by using a parabolic antenna **3011a**, the digital broadcast program information transmitted from a parabolic antenna **3031a** of the transmitting apparatus **3031** through a communication satellite **3032.**

The transmitting apparatus **3031** of the broadcasting industry company transmits to the program receiving apparatus **3010** of the viewer, program information about a program content, such as a drama, a sport, a news, etc., and program information about a commercial for a certain product, together with a program identifier which is used for identifying the program information.

The program receiving apparatus **3010** includes: a program receiving section **3011** for receiving program information and a program identifier for identifying the program information transmitted from the transmitting apparatus **3031**; a program display section **3012** for displaying the program information received by the program receiving section **3011**; and a program accumulation section **3013** for accumulating the program information received by the program receiving section **3011**. The program display section **3012** displays the program information received by the program receiving section **3011** simultaneously with the reception of the program information. On the other hand, the program display section **3012** displays program information accumulated in the program accumulation section **3013**.

In the service providing system realized by the transmitting apparatus **3031** and the program receiving apparatus **3010,** a service provider provides a certain service to a viewer through the program receiving apparatus 3010 based on a history of the display state of specific program information transmitted from the transmitting apparatus **3031** and displayed in the program display section **3012** of the program receiving apparatus **3010.**

The service provider is, for example, an advertising agency who is a creator of a commercial, a company who is selling a product advertised in such a commercial, a broadcasting industry company who is a producer of a program content, such as a drama, etc. The program information concerning provision of a service is, for example, a commercial produced by an advertising agency, a commercial provided by a product selling company, a program content provided by a broadcasting industry company, etc. If in the program receiving apparatus **3010**, the history of the display state of program information concerning provision of a service satisfies a predetermined condition, the program receiving apparatus **3010** provides a predetermined service to a viewer.

The service provider presets a condition for permitting provision of a service to a viewer, and the service permitting condition is transmitted from the transmitting apparatus **3031** of the broadcasting industry company to the program receiving apparatus **3010**.

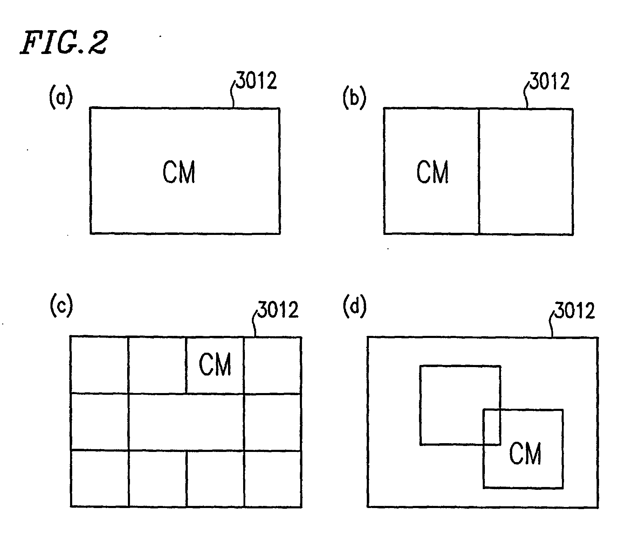

The program display section **3012** in the program receiving apparatus **3010** includes a display form setting section **3017**, for setting the display form of program information displayed on a screen of the program display section **3012**. Program information is displayed on the screen based on the display form set in the display form setting section **3017**. Regarding the display form of program information, single program information, for example, may be displayed on a signal non-divided screen as shown in Figure **2(a)**. As shown in Figures **2(b)** and **2(c)**, the screen may be divided into a plurality of regions with no overlapping area therebetween, so that each region displays single program-information (tile window). As shown in Figure **2(d)**, the screen is divided into a plurality of regions, and the regions are displayed with an overlapping area therebetween (overlap window). Further, in the case where the screen is divided into a plurality of regions, the divisional regions may have an equal screen size or may have different screen sizes. Alternatively, some of the plurality of divisional regions may have an equal screen size. Furthermore, in the case where the screen is divided into a plurality of regions, the same program information may be displayed in all the regions, or the same program information may be displayed in some of the plurality of the regions. Alternatively, different program information may be displayed in the respective regions.

The display state of certain program information displayed in the program display section **3012**, and an identifier of the displayed program information, are monitored by a display monitoring section **3014**. The display monitoring section **3014** monitors the display state based on detection results supplied by a timer **3014a,** a clock **3014b,** screen size detection means **3014c,** display form detection means **3014d,** and display time detection means **3014e.** The display state, which is determined based on the respective detection result, is stored together with the monitored identifier of the program information in a display state history storage section **3015**.

The timer **3014a** measures the time when certain program information is displayed in the program display section **3012**. The clock **3014b** measures the time when display of the certain program information in the program display section **3012** is started.

The screen size detection means **3014c** detects the screen size (area) of a region on the screen in the program display section **3012** in which the certain program information is displayed. In the case where the certain program information is displayed in a plurality of divisional screen regions, the screen size detection means **3014c** detects the total screen size of the plurality of divisional screen regions in which the certain program information is displayed.

The display form detection means **3014d** detects the position on the display screen at which the certain display program is displayed, and the shape of the display screen in which the certain display program is displayed, based on the display form set in the display form setting section **3017**.

The display time detection means **3014e** detects the number of times the certain display program is displayed in the program display section **3012**.

The display state of the certain display program monitored by the display monitoring section **3014** is sequentially stored in the display state history storage section **3015** every time the certain display program is displayed in the program display section **3012**, thereby forming display state history information.

The display state history information of the certain display program stored in the display state history storage section **3015** is transmitted by a display state history transmitting section **3016**, to a service providerwho provides a service to a viewer, through a network such as a telephone line system, the internet, or the like. Transmission of the display state history information by the display state history transmitting section **3016** is executed based on transmission instruction information transmitted from the transmitting apparatus **3031**.

The program receiving section **3011** also receives a service permitting condition transmitted from the transmitting apparatus **3031**. The service permitting condition received by the program receiving section **3011** is recorded in a service condition recording section **3021**. The service permitting condition recorded in the service condition recording section **3021** is stored in a permitting condition storage section **3022**.

The transmitting apparatus **3031** also transmits information which instructs the program receiving apparatus **3010** to provide a predetermined service. When the information which instructs provision of a service is received by the program receiving apparatus **3010**, a condition match determination section **3023** reads the service permitting condition stored in the permitting condition storage section **3022** and the history of the display state of specific program information stored in the display state history storage section **3015**, and then, the condition match determination section **3023** determines whether or not the history of the display state of the specific information stored in the display state history storage section **3015** satisfies the previously transmitted service permitting condition. If the history of the display state of the certain information satisfies the service permitting condition, a service providing section **3024** provides a predetermined service to a viewer. For example, the service providing section **3024** generates coupon information about a discount on a predetermined product. The generated coupon information is displayed in the program receiving section **3011**, and a viewer enjoys a service, such as a discount on a product, etc., based on the coupon information.

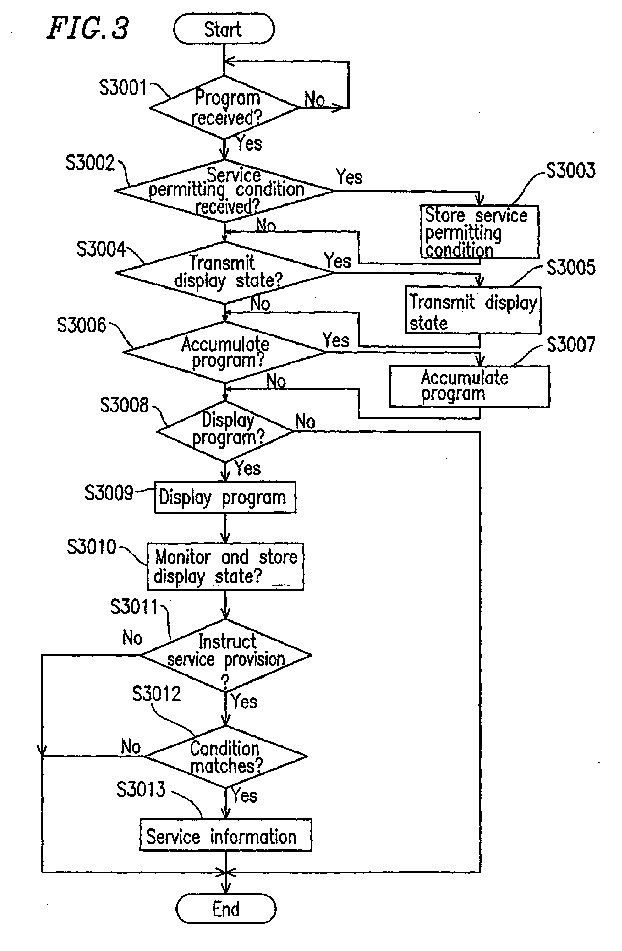

Figure **3** is a flowchart which illustrates an operation of the program receiving apparatus **3010**. After the program receiving section **3011** of the program receiving apparatus **3010** receives program information (see step S3001 of Figure **3**), it is confirmed whether or not service permitting condition information is included in the program information received by the program receiving section **3011** (step S3002). If service permitting condition information is included, the service permitting condition is stored by the service condition recording section **3021** in a permitting condition storage section **3022** (step S3003).

Further, if the program information includes instruction information which instructs transmission of a display state history from the display state history transmitting section **3016** (step S3004), the display state history is transmitted from the display state history transmitting section **3016** to a network such as a telephone line, the internet, or the like (step S3005).

Furthermore, it is confirmed whether or not the received program information is to be accumulated in the program accumulation section **3013** (step S3006), and if so, the received program information is accumulated in the program accumulation section **3013** (step S3007). Furthermore, it is confirmed whether or not program information currently received by the program receiving section **3011**, or program information accumulated in the program accumulation section **3013**, is displayed in the program display section **3012** (step S3008), and if so, the currently-received program information or the program information accumulated in the program accumulation section **3013** is displayed in the program display section **3012** (step S3009).

As described above, the viewer can view program information received by the program receiving section **3011** and displayed in the program display section **3012** simultaneously with the reception of the program information. On the other hand, the viewer can store the received program information in the program accumulation section **3013** and can view the accumulated program information at any time. Further, the program information can be displayed in any divisional region of the divided display screen by the display form setting section **3017**.

In the case where the program information is displayed in the program display section **3012**, the display monitoring section **3014** monitors the display state of the program information displayed in the program display section **3012**. The display state monitored by the display monitoring section **3014** is stored in the display state history storage section **3015** (step S3010).

In this case, the display monitoring section **3014** identifies the program information displayed in the program display section **3012** by an identifier transmitted together with the program information. Every time the specified program information is displayed in the program display section **3012**, the display state of the specified program information is sequentially stored in the display state history storage section **3015**. Thus, the display state history information for the specific program information is stored in the display state history storage section **3015**.

Assume that the specific program information is, for example, a commercial for advertising a predetermined product. When the commercial is displayed in the program display section **3012**, the display monitoring section **3014** measures the display duration of the commercial displayed in the program display section **3012** using the timer **3014a**. On the other hand, the display monitoring section **3014** detects the display start time of the commercial in the program display section **3012** using the clock **3014b.** Furthermore, the display area for the commercial displayed in the program display section **3012** is detected by the screen size detection means **3014c**, while the display position and display form of the commercial displayed in the program display section **3012** are detected by the display form detection means **3014d**. Furthermore, when the commercial is displayed in the program display section **3012** a plurality of times, the number of times the commercial is displayed is detected by the display time detection means **3014e**. The display state which is indicated by all of such detection results is sequentially stored in the display state history storage section **3015**.

Thereafter, when program information received by the program receiving section **3011** includes information which instructs provision of a service (step S3011), the condition match determination section **3023** determines whether or not the service permitting condition stored in the permitting condition storage section **3022** matches the history of the display state of the specific program information stored in the display state history storage section **3015** (step S3012).

The condition match determination section **3023** reads the display state history information of the certain program information stored in the display state history storage section **3015**, and converts the display state history information into a certain number of points (which will be described in detail later).

After the number of points is calculated based on the display state history information for the certain program information displayed in the program display section **3012**, the condition match determination section **3023** compares the total points with the service permitting condition transmitted from the transmitting apparatus **3031**. The service permitting condition transmitted from the transmitting apparatus **3031** is a point value corresponding to the number of points concerning the display state history information, and includes contents and the amount of the services provided according to the number of points.

The condition match determination section **3023** compares the total points concerning the display state history information with the service permitting condition transmitted from the transmitting apparatus **3031** in this way so as to determine the content of the service and the amount of the service. The determined service content and service amount are supplied to the service providing section **3024**. The service providing section **3024** generates coupon information about a discount on a predetermined product (step S3013).

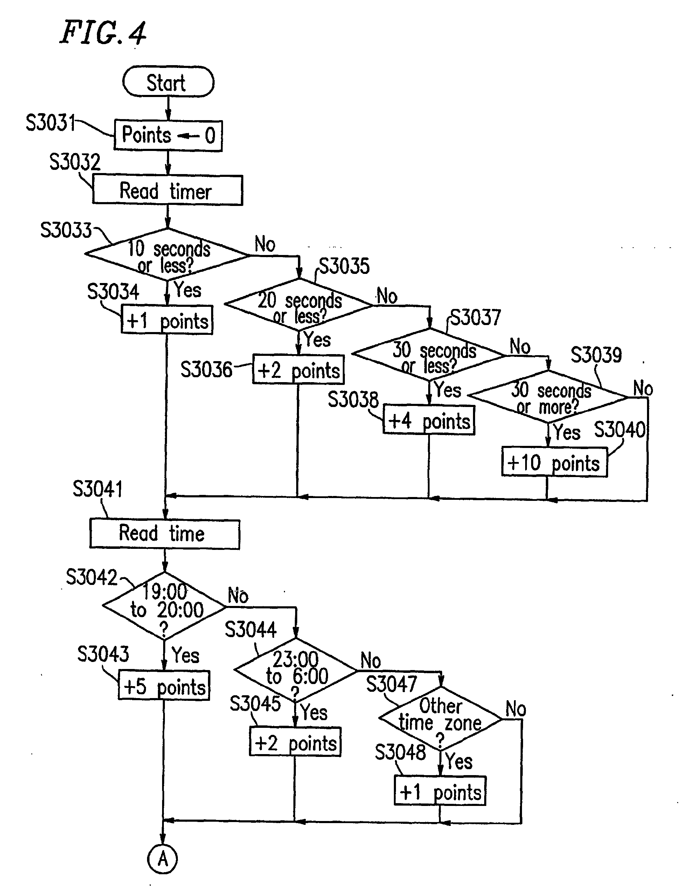

A specific process in the condition match determination section **3023** is described with reference to the flowcharts of Figures **4** through **6**. Referring to Figure **4**, the condition match determination section **3023** sets the number of points to 0 (see step S3031 of Figure **4**), and reads the display duration measured by the timer (step S3032). When the display duration is **10** seconds or less (step S3033), 1 point is added (step S3034). When the display duration is 10 to 20 seconds (step S3035), 2 points are added (step S3036). When the display duration is 20 to 30 seconds (step S3037), 4 points are added (step S3038). In this manner, as the display duration increases, the number of added points is sequentially increased (steps S3039 and S3040).

Then, the condition match determination section **3023** reads the display time measured by the clock (step S3041). When the read display time is between 19:00 and 21:00 (step S3042), 5 points are added (step S3043). When the read display time is between 23:00 and 6:00 (step S3044), 5 points are added. In this manner, the number of. points pre-assigned for each time zone is added (steps S3047 and S3048).

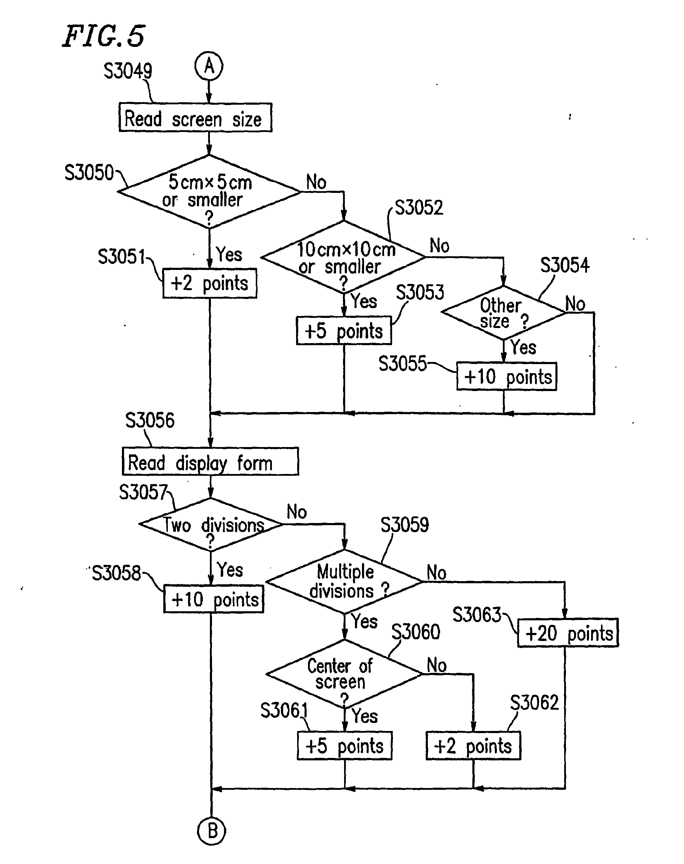

Next, the condition match determination section **3023** reads the display screen size (step S3049 of Figure **5**). When the read screen size is, for example, smaller than 5 cm × 5 cm (step S3050), 2 points are added (step S3051). When the read screen size is between 5 cm × 5 cm and 10 cm × 10 cm (step S3052), 5 points are added (step S3053). In this manner, as the screen size increases, the number of added points is sequentially increased (steps S3054 and S3055).

Thereafter, the condition match determination section **3023** reads the display form (step S3056). When the read display form is, for example, of two divisional screen regions (step S3057), 10 points are added (step S3058). When the read display form is, for example, of multiple divisional screen regions (step S3059), and if the intended program information is displayed in a divisional screen region at the center of the screen (step S3060), 5 points are added (step S3061). If the intended program information is displayed in a divisional screen region at the other position of the screen, 2 points are added (step S3062). Furthermore, when the display screen is not divided, 20 points are added (step S3063).

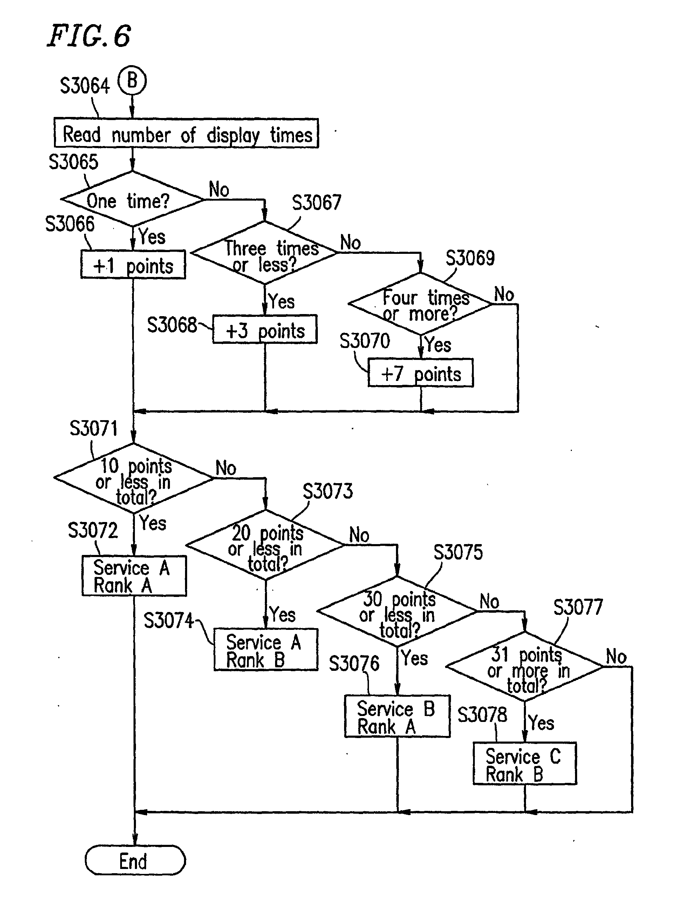

Next, the condition match determination section **3023** reads the number of display times the intended program information is displayed (step S3064 of Figure **6**). When the number of display times is, for example, 1 (step S3065), 1 point is added (step S3066). When the number of display times is 2 to 3 times (step S3067), 3 points are added (step S3068). In this manner, as the number of display times increases, the number of added points is sequentially increased (steps S3069 and S3070).

After the number of points is calculated based on the display state history information for the certain program information displayed in the program display section **3012**, the condition match determination section **3023** compares the total points with the service permitting condition transmitted from the transmitting apparatus **3031**. The service permitting condition transmitted from the transmitting apparatus **3031** is a point value corresponding to the number of points concerning the display state history information, and includes contents and the amount of the services provided according to the number of points.

For example, when the number of total points a viewer obtained based on the display state history information is 10 points or less (step S3071), coupon information indicating that the viewer can get a discount on Product A (service A) of 10% (rank A) is given to the viewer (step S3072). When the number of total points is between 10 points and 20 points (step S3073), coupon information indicating that the viewer can get a discount on Product A (service A) of 20% (rank B) is given to the viewer (step S3074). When the number of total points is between 20 points and 30 points (step S3075), coupon information indicating that the viewer can get a discount on Product B (service B) of 10% (rank A) is given to the viewer (step S3076). In this manner, coupon information which includes the preset service content and service amount is determined according to the number of total points (steps S3077 and S3078).

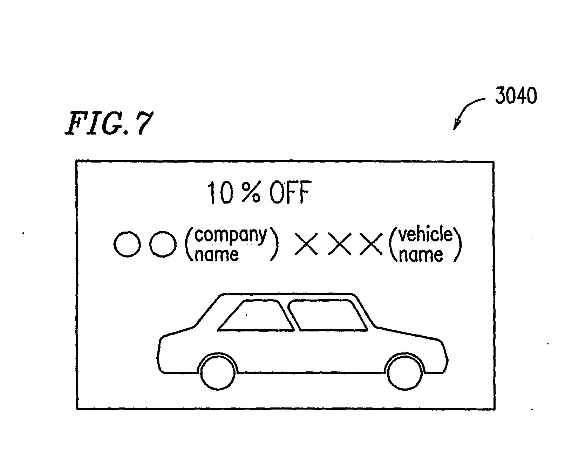

The determined coupon information is displayed in the service providing section **3024**. The displayed coupon information may be printed out through a printer, for example, in the form of a coupon ticket **3040** as shown in Figure 7. In this case, an existing electronic watermark technique may be used for preventing production of a fraudulent copy of the printed coupon ticket **3040**. In such a case, information about a copyright is formed as an electronic watermark in the coupon ticket **3040** when it is printed out.

In this way, the service providing section **3024** produces predetermined service information based on the display state history information for the certain program information displayed in the program display section **3012**. Thus, as certain program information is displayed in the program display section **3012** a larger number of times over a larger display area, a viewer can enjoy a larger number of predetermined services.

The service executed by the service providing section **3024** is not limited to production of such coupon information. Forexample, key information which unscrambles scrambled program information transmitted from the transmitting apparatus **3031** may be given to the viewer. With this key information, the scrambled program information transmitted from the transmitting apparatus **3031** can be displayed in the program display section **3012** in the unscrambled state.

Further, the display state history information stored in the display state history storage section **3015** may be stored in a memory card. The display state history information stored in the memory card can be read by an appropriate reading apparatus, whereby a viewer can enjoy a predetermined service at a place different from the place where the program receiving apparatus 3010 is installed.

### INDUSTRIAL APPLICABILITY

As described above, a program receiving apparatus of the present invention can provide an appropriate service according to the display state of certain program information, thereby motivating a viewer to view certain program information. A transmitting apparatus of the present invention cooperates with such a program receiving apparatus to establish a service providing system which can provide an appropriate service to a viewer.

## Claims

1. A program receiving apparatus, comprising:
a program receiving section for receiving program information and a program identifier for identifying the program information;
a program display section for displaying the program information received by the program receiving section;
a display monitoring section for monitoring a program display state history which is a history of the display state of the certain program information displayed in the program display section; and
a display state history storage section for storing a program identifier of the program information monitored by the display monitoring section and display state history information which is information for indicating a display state history of the program information, in the form of a pair of the program identifier and the display state history information.

2. A program receiving apparatus according to claim 1, further comprising a program accumulating section for accumulating the program information and the program identifier received by the program receiving section, wherein the program display section displays the program information accumulated in the program accumulating section.

3. A program receiving apparatus according to claim 1 or 2, further comprising a display state history transmitting section for transmitting the display history information stored in the display state history storage section.

4. A program receiving apparatus according to claim 2 or 3, further comprising a display form setting section for setting a display form of the program information displayed in the program display section, wherein the program display section displays the program information according to the display form.

5. A program receiving apparatus according to any of claims 1-4, further comprising: a permitting condition storage section for storing a service permitting condition which is a condition for provision of a service; a condition match determination section for determining whether or not the display state history information matches the service permitting condition stored in the permitting condition storage section; and a service providing section for producing information about a service provided to a viewer when the condition match determination section determines a match.

6. A program receiving apparatus according to claim 5, wherein the program receiving section receives a service permitting condition, and the program receiving apparatus further includes a service permitting condition recording section for storing the service permitting condition in the permitting condition storage section.

7. A program receiving apparatus according to any of claims 1-6, wherein the display monitoring section has a timer, and a display information history monitored by the display monitoring section includes a display duration of the program information.

8. A program receiving apparatus according to any of claims 1-6, wherein the display monitoring section has a clock, and a display information history monitored by the display monitoring section includes a display start time of the program information.

9. A program receiving apparatus according to any of claims 1-6, wherein the display monitoring section includes screen size detecting means for detecting the screen size of the program information displayed in the program display section, and a display information history monitored by the display monitoring section includes a display screen size of the program information.

10. A program receiving apparatus according to any of claims 1-6, wherein the display monitoring section includes display form detection means for detecting a display form of the program information displayed in the program display section, and a display information history monitored by the display monitoring section includes the display form of the program information.

11. A program receiving apparatus according to any of claims 1-6, wherein the display monitoring section includes display time detection means for detecting the number of times the program information is displayed in the program display section, and a display information history monitored by the display monitoring section includes the number of display times of the program information.

12. A program receiving apparatus according to any of claims 5-11, wherein the service providing section produces coupon information which is information about a coupon ticket.

13. A program receiving apparatus according to any of claims 5-11, wherein the service providing section produces key information which unscrambles a specific scrambled program.

14. A transmitting apparatus which transmits a service permitting condition based on the display history information transmitted from the display state history transmitting section recited in claim 3.
